# EUROPEAN PATENT SPECIFICATION

(11) **EP 0 970 997 B1**
(45) Date of publication and mention of the grant of the patent: **12.11.2003**
(21) Application number: 99202262.4
(22) Date of filing: 09.07.1999
(51) Int. Cl.: C08L 69/00, C08K 5/523

(54) **Flame retardant polycarbonate/abs composition**
Flammhemmende Polycarbonat/ABS-Mischung
Composition ignifugée à base de polycarbonate/abs

(30) Priority: 10.07.1998 US 113872
(43) Date of publication of application: 12.01.2000
(73) Proprietor: Cheil Industries Inc., Euiwang-shi, Kyoungki-Do (KR)
(72) Inventor: Lim, Jong Cheol, Kwachon-shi, Kyongki-do (KR); Kwon, Ick Hwan, Youngdungpo-Gu, Seoul (KR); Jang, Bok Nam, Songpa-Gu, Seoul (KR)
(74) Representative: Prins, Adrianus Willem

(56) References cited:
- EP-A- 0 767 204
- EP-A- 0 767 215
- WO-A-91/01350
- GB-A- 2 330 583
- US-A- 5 864 004
- DATABASE WPI Section Ch, Week 199502 Derwent Publications Ltd., London, GB; Class A13, AN 1995-012024 XP002145266 & JP 06 299060 A (UBE CYCON LTD), 25 October 1994 (1994-10-25)

## Description

### 1. Field of the Invention

The present invention relates to flame retardant polycarbonate-based thermoplastic resin composition with improved flame retardancy, thermal stability and stress cracking resistance that is useful for the electric and electronic products housings. Moreover, the resin composition of the present invention has no smoking and no bleeding out during injection molding. More particularly, the present invention relates to a polycarbonate-based thermoplastic resin composition which comprises a polycarbonate, a rubber-reformed graft copolymer, a vinyl copolymer, a mixture of specific polyphosphate compounds and monophosphate compounds wherein the amount of polyphosphate compounds is less than 50 wt. % and equal to or more than 10 wt. % of the total amount of the flame retardants, and further flame retardants such as a fluorinated polyolefin and/or a salt having flame-proofing properties for aromatic polycarbonates.

### 2. Description of the Prior Art

Polycarbonate molding compositions are broadly used for the parts of electrical products and automotive components as having excellent transparency, high impact strength, and flame retardant properties. However, having poor processability during molding process, polycarbonate resins are usually used by blending with other kinds of resins. For example, molding compositions comprising a polycarbonate resin and a styrene-containing resin have good processability as well as high notched impact strength.

Furthermore, polycarbonate molding compositions used for parts of home appliances and computers should have particularly high flame resistance to prevent fires. For this purpose, halogen and/or antimony containing compounds have been used to render flame retardant property to thermoplastic molding compositions. In U.S. Pat. No. 4,983,658 and 4,883,835, a halogen containing compound is used as a flame retardant. The halogen containing compound, however, results in the corrosion of the mold itself by the hydrogen halide gases released during a molding process and is fatally harmful due to the toxic gases generated during combustion.

U.S. Pat. No. 4,692,488 discloses a thermoplastic molding composition comprising a halogen-free aromatic polycarbonate, a halogen-free copolymer of styrene and acrylonitrile, a halogen-free phosphorus compound, a tetrafluoroethylene polymer, and small amounts of ABS graft polymer. The use of a phosphorus compound and perfluoroalkane polymer to render flame retardancy to a polycarbonate/ABS resin composition, as disclosed in U.S. Pat. No. 4,692,488, prevents the dripping of flaming particles during combustion. While these molding compositions indeed have adequate flame retardant behavior and mechanical properties, surface crack problem due to the migration of flame retardant during a molding process, called "bleeding out", might occur.

U.S. Pat. No. 5,030,675 describes flame retardant, thermoplastic molding composition prepared from an aromatic polycarbonate, ABS polymer, polyalkylene terephthalate together with monophosphates and fluorinated polyolefins as flame retardants. Good stress cracking resistance is accompanied by deficiencies in notched impact strength, together with unsatisfactory thermal stability when exposed to elevated temperatures during processing.

Polyphosphates are also known as flame retardants. Japanese Pat. Laid Open 59-202,240 describes the production of such a product from phosphorus oxychloride, diphenols such as hydroquinone or bisphenol A and monophenols such as phenol or cresol. These polyphosphates may be used as flame retardants in polyamide or polycarbonate. However, this publication limits the amount of the monophosphate within 40 wt. % of the total phosphate esters.

U.S. Pat. No. 5,204,394 describes a polymer mixture comprising an aromatic polycarbonate, a copolymer and/or graft copolymer containing styrene, together with polyphosphates as flame retardants. U.S. Pat. No. 5,061,745 describes a polycarbonate molding compounds consisting of an aromatic polycarbonate, ABS graft copolymer, monophosphates as flame retardants and, optionally, a copolymer. In the aforementioned patents, the representative examples of the phosphorus compound are triarylphosphates and polyphosphates. In the case of flame retardant molding composition using a base resin comprising a polycarbonate, a styrene-containing graft copolymer, vinyl copolymer, the stress cracking resistance mainly depends on the volatility of the flame retardant, i.e. molecular weight of the flame retardant, and compatibility between polycarbonate resin and the flame retardant. In the process of using triarylphosphates, a bleeding out phenomenon occurs during molding processes because the triarylphosphates form the laminae on the surface due to the volatility. On the other hand, in processes using polyphosphates, the occurrence of bleeding out caused by the evaporation of flame retardant might be decreased but the surface crack due to the migration of flame retardant to the surface of molded parts still occurs when the polyphosphate flame retardant does not have good compatibility with polycarbonate resin. Also thermal stability of compound is lowered by the thermal decomposition of polyphosphate, which leads the injection molded articles to have black streaks on the surface.

U.S. Pat. No. 5,672,645 describes flame retardant polycarbonate/ABS molding composition containing an aromatic polycarbonate, a vinyl copolymer, a graft copolymer, a combination of a monophosphate compound and an polyphosphate compound as flame retardants, and a fluorinated polyolefin. In this patent, resorcinol or hydroquinone derivatives was used as a polyphosphate compound flame retardant, but it is known that the compatibility of resorcinol or hydroquinone type polyphosphate with polycarbonate resin is not so good. So the impact strength of these composition can be lowered and surface crack due to the migration of flame retardant to the surface of molded parts still occurs. And also color stripes on the surface of molded parts occur by the thermal decomposition of these resorcinol or hydroquinone derived polyphosphate.

EP 0 767 204 A2 discloses flame retardant polycarbonate/ABS molding composition in which a mixture of a bisphenol-A type polyphosphate and a monophosphate ester is blended with polyphenylene ether resin or polycarbonate resin. The molding composition in this patent does not smoke and bleed out during injection molding and the mixture of phosphate esters wherein the amount of polyphosphate is more than 50 wt% of the total flame retardant is easy to handle. But the resin composition disclosed in this patent has relatively poor performance in flame retardancy, impact strength and thermal stability during injection molding.

EP 0 767 215 A1 discloses that when an aromatic vinyl copolymer and an aromatic vinyl graft copolymer are added as a compatibility agent to a resin composition comprising aromatic polycarbonate, rubber-modified styrene polymer and a mixture of an aromatic phosphate and a flame retardant auxiliary, the impact strength is excellent when the average N value is within the range of 0 to 0.9 (see Table 5 and page 25 lines 51/52). Said document does not teach that a particular amount of polyphosphate needs to be used to establish both and improved flame retardancy and an improved thermal stability.

It is further observed that in WO 91/01350 ignition resistant polycarbonate blends are disclosed comprising a carbonate polymer, a rubber-modified styrene-acrylonitrile-type polymer, an organophosphorus compound, a fluorinated-polymer, and a halogenated diphenol oligocarbonate.

In view of the foregoing circumstances, the present inventors have proceeded with extensive research, resulting in the finding of a new thermoplastic resin composition with balanced properties of excellent thermal stability during processing, improved flame retardancy, high impact strength, and high heat resistance. The novel flame retardant thermoplastic resin composition comprises a polycarbonate, a rubber-reformed graft copolymer, vinyl copolymer, a mixture of bisphenol A derived specific type polyphosphate compounds and a monophosphate ester compounds, and a fluorinated polyolefin. The present invention has been completed based on the above findings.

### SUMMARY OF THE INVENTION

An object of the invention is to provide a flameproof thermoplastic resin composition which has a well-balanced properties such as improved flame retardancy, good impact strength, high heat resistance, and excellent thermal stability during processing which comprise a polycarbonate, a rubber-reformed graft copolymer, vinyl copolymer, a mixture of bisphenol A derived specific type polyphosphate compounds and a monophosphate ester compounds wherein the amount of polyphosphate compounds is less than 50 wt.% and more than or equal to 10 wt. % of the total flame retardants, and fluorinated polyolefin.

The present invention provides flame retardant thermoplastic molding composition comprises
(A) 40 to 99 parts by weight of a halogen free, thermoplastic polycarbonate;
(B) 1 to 50 parts by weight of a graft polymer prepared by graft polymerizing
   (B-1) 5 to 95 parts by weight of a mixture of
      (B-1.1) 50 to 95 parts by weight of styrene, α -methylstyrene, halogen or methyl ring-substituted styrene, C1-C8 alkyl methacrylate, C1-C8 alkyl acrylate, or a mixture thereof and
      (B-1.2) 5 to 50 parts by weight of acrylonitrile, methacrylonitrile, C1-C8 alkyl methacrylates, C1-C8 alkyl acrylate, maleic anhydride, C1-C4 alkyl or phenyl N-substituted maleimides or a mixture thereof, and
   (B-2) 5 to 95 parts by weight of a polymer with a glass transition temperature of below -10 °C and selected from a group consisting of butadiene rubbers, acryl rubbers, ethylene/propylene rubbers, styrene/butadiene rubbers, acrylonitrile/butadiene rubbers, isoprene rubbers, EPDM rubbers, polyorganosiloxane derivatives, and mixture thereof.
(C) 0 to 50 parts by weight of a vinyl copolymer or mixture thereof prepared from
   (C-1) 50 to 95 parts by weight of styrene, α -methylstyrene, ring-substituted styrenes, C1-C8 alkyl methacrylates, C1-C8 alkyl acrylates or a mixture thereof and
   (C-2) 50 to 5 parts by weight of acrylonitrile, methacrylonitrile, C1-C8 alkyl methacrylates, C1-C8 alkyl acrylates, maleic anhydride, N-substituted maleimides and a mixture thereof,
(D) 0.5 to 20 parts by weight, based on 100 parts by weight of (A)+(B)+(C), of a mixture of phosphate esters comprising
   (D-1) more than or equal to 10 % by weight and less than 50 % by weight of a mixture of polyphosphates wherein each component is represented by the general formula (I) 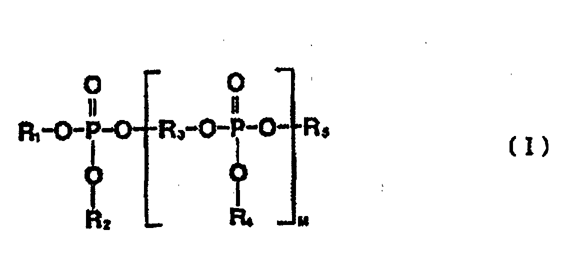 wherein,
      R₁, R₂, R₄, and R₅ independently of one another are C6-C20 aryl or alkyl substituted C6-C20 aryl, R₃ is a residue derived from bisphenol A, and M is an integer equal to or greater than 1, and
   (D-2) more than or equal to 50 % by weight and less than or equal to 90% by weight of a monophosphate represented by the general formula (II) or a mixture of monophosphates wherein each component is represented by the general formula (II) 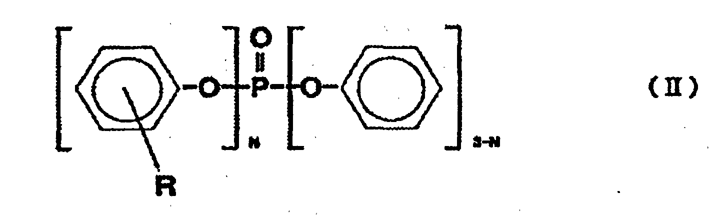 wherein
      R is alkyl group such as t-butyl, isopropyl, isobutyl, isoamyl, t-amyl and N is 0 or an integer from 1 to 3, and
(E) further flame retardants.

### Detailed Description of Preferred Embodiments

### (A) Halogen-free, Thermoplastic Polycarbonate

Suitable component (A) thermoplastic, aromatic polycarbonates to be used in the invention are generally prepared by reacting diphenols being represented by the following formula (III) with phosgene, a halogen formate or a carbonic diester, 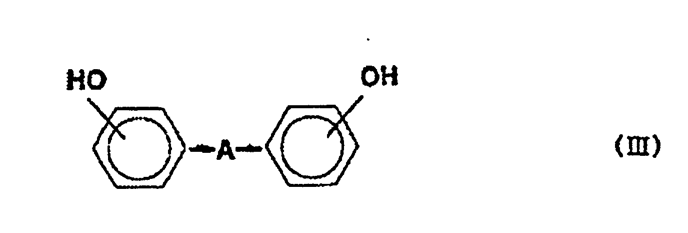 wherein
A is a single bond, C1-C5 alkylene, C2-C6 alkylidene, C5-C6 cycloalkylidene,-S- or -SO2-. Specific examples of diphenols of the formula (III) include hydroquinone, resorcinol, 4,4'-dihydroxydiphenyl, 2,2-bis-(4-hydroxyphenyl) propane, 2,4-bis-(4-hydroxyphenyl)-2-methyl-butane, 1,1-bis-(4-hydroxyphenyl)-cyclohexane, 2,2-bis-(3-chloro-4-hydroxyphenyl) propane, 2,2-bis -(3,5-dibromo-4-hydroxyphenyl)propane. Among these, 2,2-bis-(4-hydroxyphenyl)propane, 2,2-bis-(3,5-dichloro-4-hydroxyphenyl)propane and 1,1-bis-(4-hydroxyphenyl)-cyclohexane are preferred. The most preferred and widely used aromatic polycarbonates are prepared from bisphenol-A, and 2,2-bis-(4-hydroxyphenyl)propane.

As the suitable polycarbonates (A) to be incorporated into the present invention, it is ones having an average molecular weights (Mw, weight average, as measured for example by ultracentrifugation or light scattering measurement) of 10,000 to 200,000, preferably of 15,000 to 80,000.

Suitable polycarbonates (A) incorporated into the composition of the invention may be branched in a known manner, in particular preferably by incorporation 0.05 to 2 mol.%, based to total quantity of diphenols used, of tri- or higher functional compounds, for example, those with three or more phenolic groups. Both and copolycarbonates are illustrated as suitable polycarbonates for the present invention. Component A may also be a blend of the thermoplastic polycarbonates specified above.

The polycarbonates (A) may be partially or entirely replaced with aromatic polyester-carbonates which are obtained by performing the polymerization reaction in the presence of an ester precursor, for example, a difunctional carboxylic acid.

### (B) Graft Copolymer

The graft copolymers to be used in the present invention are those prepared from the following monomer units
(B-1) 5 to 95 parts by weight, based on (B), of a mixture of
   (B-1.1) 50 to 95 parts by weight of styrene, α -methylstyrene, halogen or methyl ring-substituted styrene, C1-C8 alkyl methacrylate, C1-C8 alkyl acrylate, or a mixture thereof, and
   (B-1.2) to 50 parts by weight of acrylonitrile, methacrylonitrile, C1-C8 alkyl methacrylates, C1-C8 alkyl acrylate, maleic anhydride, C1-C4 alkyl or phenyl N-substituted maleimides or a mixture thereof onto
(B-2) 5 to 95 parts by weight of a polymer with a glass transition temperature of below -10 °C and selected from a group consisting of butadiene rubbers, acryl rubbers, ethylene/propylene rubbers, styrene/butadiene rubbers, acrylonitrile/butadiene rubbers, isoprene rubbers, EPDM rubbers, polyorganosiloxane derivatives, and a mixture thereof. C1-C8 alkyl acrylates or C1-C8 alkyl methacrylates are the esters of acrylic or methacrylic acids respectively with monohydric alcohols with 1 to 8 C atoms. Specific examples include methyl methacrylate, ethyl methacrylate and propyl methacrylate. Among methyl methacrylate, methacrylic acid ester is particularly preferred.

Preferred examples of the graft polymers (B) include polybutadienes, butadiene/styrene copolymers and acryl rubbers grafted with styrene and/or acrylonitrile and/or (meth)acrylic acid alkyl esters. Of these, ABS polymers are particularly preferred for the polymers (B).

The preferred average particle size of the rubber(B.2) is 0.05 to 4 µm in order to improve the impact strength and surface of the moldings.

The graft copolymers of components (B) may be prepared according to the conventional methods in the art of preparation of the graft copolymers, in particular, emulsion, suspension, solution or bulk polymerization. Preferred method for preparing the graft copolymer (B) is emulsion or bulk polymerization.

### (C) Vinyl Copolymer

Component (C) vinyl copolymers to be used in the present invention are those prepared from
(C-1) 50 to 95 parts by weight of styrene, α -methylstyrene, ring-substituted styrenes, C1-C8 alkyl methacrylates, C1-C8 alkyl acrylates or a mixture thereof, and
(C-2) 50 to 5 parts by weight of acrylonitrile, methacrylonitrile, C1-C8 alkyl methacrylates, C1-C8 alkyl acrylates, maleic anhydride, N-substituted maleimides or a mixture thereof.

C1-C8 alkyl acrylates or C1-C8 alkyl methacrylates are the esters of acrylic or methacrylic acids respectively with monohydric alcohols with 1 to 8 carbon atoms. Specific examples include methyl methacrylate, ethyl methacrylate and propyl methacrylate. For methacrylic acid ester, methyl methacrylate is particularly preferred. The copolymers of component (C) may be often produced as secondary products in the graft polymerization during production of component (B), particularly when a large quantity of monomers is grafted onto a small quantity of rubber. The quantity of copolymer (C) to be used in accordance with the present invention does not include these secondary graft polymerization product.

The component (C) copolymers are resinous thermoplastic material, and they do not contain rubber.

Preferred copolymers (C) are those prepared from methyl methacrylate with methyl (meth)acrylate, which may be produced by free-radical polymerization, in particular by emulsion, suspension, solution or bulk polymerization.
Preferred copolymers (C) are also those prepared from styrene with acrylonitrile and optionally methyl methacrylate, from α -methylstyrene with acrylonitrile and optionally methyl methacrylate or from styrene and α -methylstyrene with acrylonitrile and optionally methyl methacrylate.

The component (C) styrene/acrylonitrile copolymers are materials known per se and may be prepared, for examples, by free-radical polymerization, in particular by emulsion, suspension, solution or bulk polymerization. The preferable component (C) copolymers is illustrated as those having molecular weights Mw (weight average, determined by light scattering or settling) of between 15,000 and 200,000.

Preferred copolymers (C) to be incorporated into the composition of the invention are also random copolymers of styrene and maleic anhydride, which may be produced from the corresponding monomers by continuous bulk or solution polymerization with incomplete conversion.

The proportions of the two components in the suitable random styrene-maleic anhydride copolymers may be varied within a wide range. The preferred maleic anhydride content is between 5 and 25 wt. %. The molecular weights (number average, Mn) of the suitable component (C) random styrene-maleic anhydride copolymers may vary over a wide range. A range of 60,000 to 200,000 is preferred. An intrinsic viscosity of 0.3 to 0.9 is preferred for these products.

Instead of styrene, the vinyl copolymers (C) may also contain ring-substituted styrenes such as p-methylstyrene, vinyltoluene, 2,4-dimethylstyrene, and other substituted styrenes such as α -methylstyrene.

The vinyl copolymers mentioned in the above can be used alone or in admixture with other two or more vinyl copolymers.

### (D) A mixture of phosphate esters

The thermoplastic resin compositions according to the invention contain a mixture of (D-1) and (D-2) as a flame retardant. The weight ratios of (D-1) and (D-2) may be varied within a wide range, according to the purpose of the properties to be required. The mixture consists of more than or equal to 10 wt. % and less than 50 wt. % of (D-1) and more than or equal to 50 wt. % and less than or equal to 90 wt. % of (D-2), preferably 10 to 47 wt. % of (D-1) and 90 to 53 wt. % of (D-2), and more preferably, 15 to 45 wt. % of (D-1) and 85 to 55 wt. % of (D-2).

As generally known to this field, bisphenol-A derived polyphosphates are synthesized by reacting phosphorus oxychloride with bisphenol-A and monophenols such as phenol or cresol. Due to the nature of the production process of the polyphosphates, monophosphates(D-2) are always included in the reaction mixture. To obtain the mixture of phosphate esters(D) having desired composition, commercially available monophosphates such as triphenylphosphate(TPP) can be added.

The preferable composition of (D) is such a composition that the average value of the number of phosphorus atom per phosphate molecule is 1.03 - 2.0, more preferably, 1.03 - 1.6.

### (D-1) Polyphosphate ester compound

The thermoplastic resin compositions according to the present invention contain, as a flame retardant, a mixture of polyphosphate ester compound (D-1) and a monophosphate ester compound (D-2).

Component (D-1) is a mixture of polyphosphates wherein each component is represented by the general formula (I) 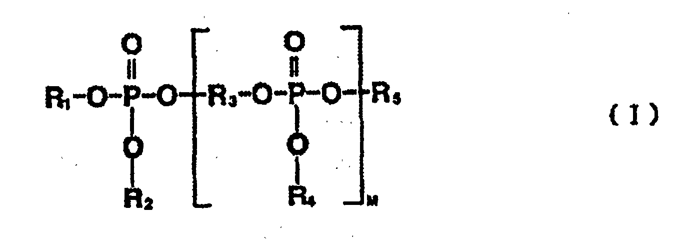 wherein
R₁, R₂, R₄, and R₅ mutually independently are C6-C20 aryl or alkyl substituted C6-C20 aryl, R3 is a residue derived from bisphenol A, and M is an integer equal to or greater than 1. Preferably, (D-1) is a mixture of polyphosphates represented by formula ( I ) wherein M is 1, 2, 3, 4, or 5.

### (D-2) monophosphate Compound

Component (D-2) is a monophosphate represented by the general formula (II) or a mixture of monophosphates wherein each component is represented by the general formula (II) 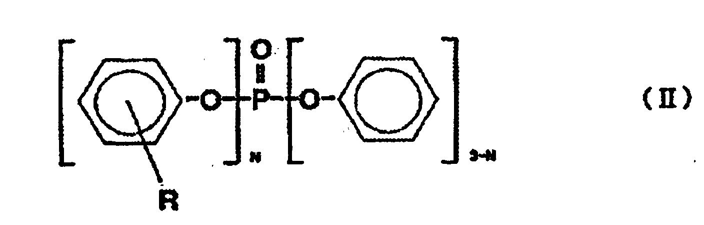 wherein
R is alkyl group such as t-butyl, isopropyl, isobutyl, isoamyl, t-amyl and N is 0 or an integer from 1 to 3. Preferably, the component (D-2) is a mixture of alkyl substituted monophosphate esters comprising 0 to 20 parts by weight of tri(alkylphenyl)phosphate(N=3), 0 to 50 parts by weight of di(alkylphenyl)monophenylphosphate(N=2), 0 to 60 parts by weight of diphenylmono(alkylphenyl)phosphate(N=1), and 10 to 100 parts by weight of triphenylphosphate(N=0).

The preferred substituent R is t-butyl and isopropyl. The most preferred substituent R is t-butyl. And a mixture of mixed t-butylphenyl phosphate esters and the mixed isopropylphenyl phosphate esters are also preferred.

### (E) Further flame retardants

The thermoplastic resin compositions according to the present invention include further flame retardants to improve the flame-retarding properties. In particular, a fluorinated polyolefins and/or a salt having flame-retarding properties for aromatic polycarbonates are used as further flame retardants.

Examples of fluorinated polyolefins include polytetrafluoroethylene, polyvinylidene fluoride, tetrafluoroethylene/hexafluoropropylene and ethylene/tetrafluoroethylene copolymers. The fluorinated polyolefins may be used alone or in admixture with other two or more fluorinated polyolefins.

The fluorinated polyolefin decreases the melt flow of the flameproof thermoplastic resin during combustion by forming a fibrillary network in the resin and increases shrinkage of the resin, thereby preventing dripping of the melted resin during combustion.

These fluorinated polymers may be produced using known processes, for example, by polymerization oftetrafluoroethylene in an aqueous medium with a free radical forming catalyst, for example sodium, potassium or ammonium peroxydisulphate at pressures of 7 to 71 kgf/cm2 and at temperatures of 0°C to 200°C, preferably at temperatures of 20°C to 100°C.

The fluorinated polyolefins may be used in powder form or in emulsion form. Fluorinated polyolefins of emulsion form show a good dispersion, but make the preparation process complicated. Therefore, it is desirable to use powder formed fluorinated polyolefins that can be dispersed evenly in the total resins to form fibrillar network.

The fluorinated polyolefins suitable for the present invention is tetrafluoroethylene polymers with average particle sizes of 0.05 to 1000 µm and densities of 2.0 g/cm3 to 2.3 g/cm3.

Salts having flame retarding properties are generally known and are used commercially in polycarbonate based resins. All salts which are suitable for polycarbonate based resins can be used in the resin composition of the present invention. Specific examples are salts of sulfonates for example, sodium trichlorobenzene sulfonate, salts of sulfone sulfonates, for example, potassium salt of diphenylsulfone sulfonate, salts of alkane sulfonic acid and sodium aluminum hexafluoride.

An amount of the fluorinated polyolefins to be blended in the composition is 0.05 to 5.0 part by weight, based on 100 parts by weight of the basic resin (A)+(B)+(C) and an amount of the salts to be blended is 0.01 - 1 parts by weight of the base resin (A)+(B)+(C).

In addition to the above-mentioned components, the thermoplastic molding composition according to the invention may further contain the conventional additives such as lubricants and mold release agents, nucleating agents, antistatic agents, stabilizers, fillers and reinforcing materials, together with dyes and pigments. The amount of fillers or reinforced molding compounds to be incorporated may contain up to 60 parts, preferably 10 to 40 parts by weight based on 100 parts by weight of the basic resin (A)+(B)+(C).

The thermoplastic resin compositions can be prepared according to the conventional techniques of preparation of resin compositions, for example, by mixing together the constituents including the various additives and melt-extruding within the extruders in pellet form.

The molding composition according to the present invention may be used to produce moldings of any kind. The molding composition are particularly suitable for the production of electric and electronic products housings (for example, computer casing parts), which are required to exhibit particularly high notched impact strength and stress cracking resistance.

### DESCRIPTION OF THE PREFERRED EMBODIMENTS

### (A) Polycarbonate

Bisphenol A based polycarbonate with an average molecular weight(Mw) of 20,000 was used.

### (B) Rubber Reformed Graft Copolymer

45 parts by weight of polybutadiene latex, 36 parts by weight of styrene, 14 parts by weight of acrylonitrile, and 150 parts by weight of deionized water were mixed, and 1.0 parts by weight of potassium oleate, 0.4 parts by weight of cumene hydroperoxide, and 0.3 parts by weight of mercaptan-based chain transfer agent were added to the mixed solution. The resulting solution was kept at 75 °C for 5 hours to prepare a ABS graft copolymer latex. To the resulting graft copolymer, 1% sulfuric acid solution was added to prepare graft copolymer in powder form.

### (C) Vinyl copolymer

To a mixture of 70 parts by weight of styrene, 30 parts by weight of acrylonitrile and 120 parts by weight of deionized water, 0.2 parts by weight of azobisisobutylonitrile and 0.5 parts by weight of tricalcium phosphate were added. SAN copolymer was prepared by suspension polymerization, and subsequently by washing, dehydrating and drying the resultant product. SAN copolymer in powder form was obtained.

### (D) A mixture of phosphate esters

### (Da) Bisphenol-A type polyphosphate

Bisphenol-A type polyphosphate(Da) used was a mixture of phosphates wherein each components were represented by the gerneral formula (I), wherein the substituents designated as R₁, R₂, R₄, and R₅ are phenyl groups, and M was 0, 1, 2, 3, or 4. The amount of triphenylphosphate(phosphate with M=0 in general formula (I)) was 3 wt. % of the phosphate mixture and the average value of the number of phosphorus atom per phosphate molecule was 2.1.

### (Db) Triphenylphosphate (TPP)

### (Dc) A mixture of t-butyl substituted monophosphate

A mixture of t-butyl substituted monophosphate esters containing 0.5% by weight of triphenylphosphate, 33.2% by weight of diphenyl(t-butylphenyl)phosphate, 49.5% by weight of phenyldi(t-butylphenyl)phosphate and 12.5% by weight of tri(t-butylphenyl)phosphate was used.

### (E) Fluorinated Polyolefin

Teflon(trademark) 7AJ of Dupont, Inc. of U.S.A. was used.

### Examples 1 and 2 and comparative examples 1 and 2

All the components were mixed with an antioxidant and thermal stabilizer, and extruded in a twin-screw extruder(L/D=35, Φ =45). The resulting extrudates were pelletized and the test specimens for mechanical properties were produced using an 10 oz injection molding machine at the temperature of 250 °C.

Bleeding out was measured by observing the injection molded container produced on an 40 oz injection molding machine at the temperature of 250°C with a dimension of 200 mm × 200 mm × 100 mm × 3 mm, length, width, height, and thickness respectively.

Thermal stability was measured by the occurrence of black streak on the surface of molded parts of dimensions 200 mm × 50 mm × 2 mm after injection molding. The injection molding temperature was varied from 280 °C to 320 °C and the injection pressure and speed were also varied. For the consideration of various types of injection molding conditions used in the practical commercial injection molding process, various conditions including relatively severe conditions of high temperature and high injection speed were tested.

It may be seen from the Table that the examples 1 and 2 with a mixture of a bisphenol A derived polyphosphate and monophosphate esters wherein the amount of bisphenol A derived polyphosphate is less than 50 wt. % and more than or equal to 10 wt. % of the total amount of the flame retardant have higher impact strength, better flame retardancy, and distinctly higher thermal stability than the comparative examples 1 and 2 with flame retardants having more than 50 wt. % of the bisphenol A derived polyphosphates in the total flame retardants. Moreover, all the examples and the comparative examples do not show bleeding out during injection molding.

| | | Example 1-2 | | Comparative example 1-2 | |
|---|---|---|---|---|---|
| | | 1 | 2 | 1 | 2 |
| (A) Polycarbonate | | 80 | 67 | 67 | 50 |
| (B) Graft Copolymer | | 10 | 13 | 13 | 20 |
| (C) SAN | | 10 | 20 | 20 | 30 |
| (Da) Bisphenol-A diphosphate | | 5.8 | 4 | 11 | 6.2 |
| (Db) TPP | | 3.1 | 10 | 3 | 5.8 |
| (Dc) A mixture of t-butyl substituted monophosphate | | 3.1 | - | - | - |
| Weight % of (D-1) and (D-2) in total phosphate esters | (D-1) | 47 | 28 | 76 | 50 |
| | (D-2) | 53 | 72 | 24 | 50 |
| (E) Fluorinated Polyolefin | | 0.4 | 0.2 | 0.2 | - |
| UL94⁽¹⁾ (1/16") | | V-0 | V-0 | V-1 | V-2 |
| Izod Impact Strength⁽²⁾ (1/8", kg cm/cm) | | 42 | 39 | 35 | 31 |
| Heat Resistance⁽³⁾ (VST, °C) | | 94 | 84 | 85 | 74 |
| Bleeding out⁽⁴⁾ | | 0 | 0 | 0 | 0 |
| Thermal stability | | 0 | 0 | × | Δ |

| | | | | | |
|---|---|---|---|---|---|
| Notes) (1) UL 94 (1/16") was tested according to UL 94 VB. | | | | | |
| (2) Izod Impact Strength was tested according to ASTM D256. | | | | | |
| (3) Heat Resistance was tested according to ASTM D1525. | | | | | |
| (4) Bleeding out 0 : No bleeding out was observed. × : Bleeding out was observed. (5) Thermal Stability 0 : Black streak was not observed. Δ : Black streak was observed depending on injection molding condition. × : Black streak was observed often. | | | | | |

## Claims

1. Flame retardant, thermoplastic molding composition which comprises
(A) 40 to 99 parts by weight of a halogen free, thermoplastic polycarbonate;
(B) 1 to 50 parts by weight of a graft polymer prepared by graft polymerizing
(B-1) 5 to 95 parts by weight of a mixture of
(B-1.1) 50 to 95 parts by weight of styrene, α -methylstyrene, halogen or methyl ring-substituted styrene, C1-C8 alkyl methacrylate, C1-C8 alkyl acrylate, or a mixture thereof and
(B-1.2) 5 to 50 parts by weight of acrylonitrile, methacrylonitrile, C1-C8 alkyl methacrylates, C1-C8 alkyl acrylate, maleic anhydride, C1-C4 alkyl or phenyl N-substituted maleimides or a mixture thereof onto
(B-2) 5 to 95 parts by weight of a polymer with a glass transition temperature of below -10 °C and selected from a group consisting of butadiene rubbers, acryl rubbers, ethylene/propylene rubbers, styrene/butadiene rubbers, acrylonitrile/butadiene rubbers, isoprene rubbers, EPDM rubbers, polyorganosiloxane derivatives, and mixture thereof;
(C) 0 to 50 parts by weight of a vinyl copolymer or mixture thereof prepared from
(C-1) 50 to 95 parts by weight of styrene, α -methylstyrene, ring-substituted styrenes, C1-C8 alkyl methacrylates, C1-C8 alkyl acrylates or a mixture thereof and
(C-2) 50 to 5 parts by weight of acrylonitrile, methacrylonitrile, C1-C8 alkyl methacrylates, C1-C8 alkyl acrylates, maleic anhydride, N-substituted maleimides and a mixture thereof;
(D) 0.5 to 20 parts by weight, based on 100 parts by weight of (A)+(B)+(C), of a mixture of phosphate esters comprising
(D-1) more than or equal to 10 % by weight and less than 50 % by weight of a mixture of polyphosphates wherein each component is represented by the general formula (I) 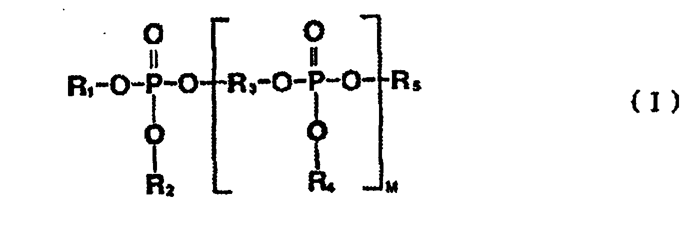 wherein
R₁, R₂, R₄ and R₅ independently of one another are C6-C20 aryl or alkyl substituted C6-C20 aryl, R₃ is a residue derived from bisphenol A, and M is an integer equal to or greater than 1, and
(D-2) more than or equal to 50 % by weight and less than or equal to 90% by weight of a monophosphate represented by the general formula (II) or a mixture of monophosphates wherein each component is represented by the general formula (II) 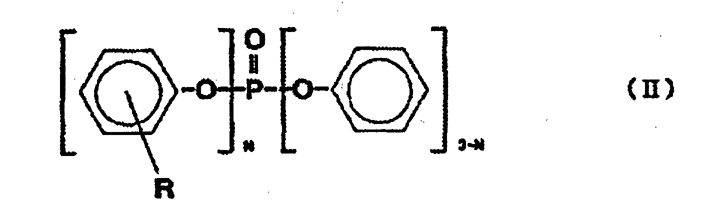
wherein
R is alkyl group such as t-butyl, isopropyl, isobutyl, isoamyl, t-amyl and N is 0 or an integer from 1 to 3; and
(E) further flame retardants comprising 0.05 to 5.0 part by weight, based on 100 parts by weight of the basic resin (A)+(B)+(C), of a fluorinated polyolefin and/or 0.01 - 1 parts by weight of the base resin (A)+(B)+(C) of a salt having flame retarding properties for aromatic polycarbonates.

2. Flame retardant thermoplastic molding composition according to claim 1, wherein weight ratio of (D-1) to (D-2) is between 10:90 and 47:53.

3. Flame retardant thermoplastic molding composition according to claim 1, wherein weight ratio of (D-1) to (D-2) is between 15:85 and 45:55.

4. Flame retardant thermoplastic molding composition according to claim 1, wherein said component (D-1) is a mixture of polyphosphates wherein each component, represented by the formula (I), has M value of 1, 2, 3, 4, or 5.

5. Flame retardant thermoplastic molding composition according to claim 1, wherein the R₁, R₂, R₄, and R₅ of component (D-1) are all phenyl.

6. Flame retardant thermoplastic molding composition according to claim 1, wherein said component (D-1) is bisphenol-A diphenylphosphate.

7. Flame retardant thermoplastic molding composition according to claim 1, wherein said component (D-2) is a mixture of alkyl substituted monophosphate esters comprising 0 to 20 parts by weight of tri(alkylphenyl)phosphate(N=3), 0 to 50 parts by weight of di(alkylphenyl)monophenylphosphate(N=2), 0 to 60 parts by weight of diphenylmono(alkylphenyl)phosphate(N=1), and 10 to 100 parts by weight of triphenylphosphate(N=0).

8. Flame retardant thermoplastic molding composition according to claim 1, wherein the alkyl group R of said component (D-2) is t-butyl.

9. Flame retardant thermoplastic molding composition according to claim 1, wherein the alkyl group R of said component (D-2) is isopropyl.

10. Flame retardant thermoplastic molding composition according to claim 1, wherein the composition of said component (D) is such a composition that the average value of the number of phosphorus atom per phosphate molecule is 1.03 - 2.0.

11. Flame retardant thermoplastic molding composition according to claim 1, wherein the composition of said component (D) is such a composition that the average value of the number of phosphorus atom per phosphate molecule is 1.03 - 1.6.

12. Flame retardant thermoplastic molding composition according to claim 1, wherein said fluorinated polyolefin in component (E) is a fluorinated polyolefin with average particle sizes of 0.05 to 1000 µm and densities of 2.0 g/cm³ to 2.3 g/cm³

13. Flame retardant thermoplastic molding composition according to claim 1, wherein said salt in component (E) is a salt selected from the group consisting of salts of sulfonates, salts of sulfone sulfonates, and salts of alkane sulfonic acids.

14. Flame retardant thermoplastic molding composition according to claim 1, wherein said resin composition further includes at least one additives selected from the group consisting of inorganic fillers, glass fibers, carbon fibers, thermal stabilizers, antioxidants, light stabilizers, plasticizers, dyes, pigments, lubricants and mold release agents, fillers, nucleating agents and antistatic agents.

15. Flame retardant thermoplastic molding composition having improved flame retardancy and thermal stability, consisting essentially of
(A) 40 to 99 parts by weight of aromatic polycarbonate;
(B) 2 to 40 parts by weight of a graft polymer of styrene and acrylonitrile on particulate, crosslinked polybutadiene rubber,
(C) 1 to 40 parts by weight of styrene/acrylonitrile copolymer;
(D) 2 to 20 parts by weight, based on 100 parts by weight of (A)+(B)+(C), of a mixture of
(D-1) more than or equal to 10 % by weight and less than 50 % by weight of a mixture of polyphosphates wherein each component is represented by the general formula (I) 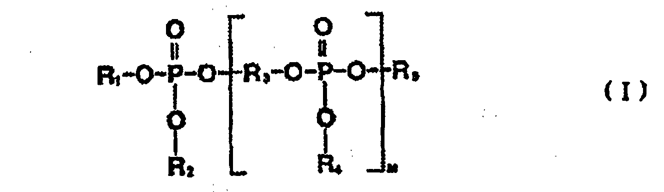 wherein
R₁, R₂, R₄, and R₅ are all phenyl, R₃ is a residue derived from bisphenol A, and M is an integer equal to 1, 2, 3, 4 or 5, and
(D-2) more than or equal to 50 wt. % and less than or equal to 90 wt. %, based on (D), of triphenylphosphate; and
(E) 0.05 to 5 parts by weight of tetrafluoroethylene polymer and/or 0.01 to 1 parts by weight of potassium salt of sulfone sulfonate.

16. Articles formed from the thermoplastic resin composition as claimed in claim 1.

## Patentansprüche

1. Flammenhemmende, thermoplastische Formmasse mit
(A) 40 bis 99 Gewichtsteilen eines halogenfreien, thermoplastischen Polycarbonats;
(B) 1 bis 50 Gewichtsteilen eines Pfropfpolymers hergestellt durch Propfpolymerisation von
(B-1) 5 bis 95 Gewichtsteilen einer Mischung aus
(B-1.1) 50 bis 95 Gewichtsteilen Styren, α-Methylstyren, Halogen- oder Methyl-Ring-substituiertem Styren, C1-C8 Alkylmethacrylat, C1-C8 Alkylacrylat, oder einer Mischung davon und
(B-1.2) 5 bis 50 Gewichtsteilen Acrylnitril, Methacrylnitril, C1-C8 Alkylmethacrylat, C1-C8 Alkylacrylat, Maleinsäureanhydrid, C1-C4 Alkyl- oder Phenyl-N-substituierten Maleimiden oder einer Mischung davon auf
(B-2) 5 bis 95 Gewichtsteilen eines Polymers mit einer Glasübergangstemperatur von unter -10°C, ausgewählt aus einer Gruppe bestehend aus Butadienkautschuken, Acrylkautschuken, Ethylen/Propylen-Kautschuken, Styren/Butadien-Kautschuken, Acrylnitril/Butadien-Kautschuken, Isopren-Kautschuken, EPDM-Kautschuken, Polyorganosiloxan-Derivaten, und Mischungen davon;
(C) 0 bis 50 Gewichtsteilen eines Vinylcopolymers oder einer Mischung davon hergestellt aus
(C-1) 50 bis 95 Gewichtsteilen Styren, α-Methylstyren, Ring-substituierten Styrenen, C1-C8 Alkylmethacrylaten, C1-C8 Alkylacrylaten oder einer Mischung davon und
(C-2) 50 bis 5 Gewichtsteilen Acrylnitril, Methacrylnitril, C1-C8 Alkylmethacrylaten, C1-C8 Alkylacrylaten, Maleinsäureanhydrid, N-substituierten Maleimiden und einer Mischung davon;
(D) 0,5 bis 20 Gewichtsteilen, bezogen auf 100 Gewichtsteile (A)+(B)+(C), einer Mischung von Phosphatestern mit
(D-1) gleich oder mehr als 10 Gew.% und weniger als 50 Gew.% einer Mischung von Polyphosphaten, worin jede Komponente durch die allgemeine Formel (I) 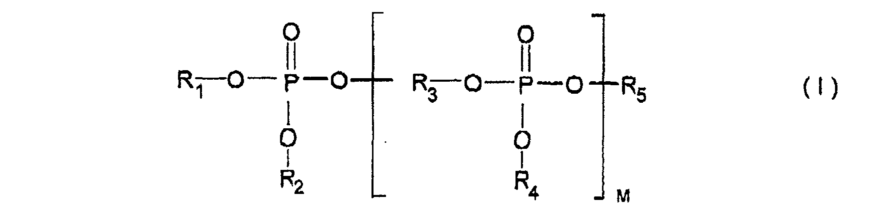 wiedergegeben wird,
wobei R₁, R₂, R₄ und R₅ unabhängig von einander C6-C20 Aryl oder Alkylsubstituiertes C6-C20 Aryl sind, R₃ ein Rest abgeleitet aus Bisphenol A ist und M eine ganze Zahl gleich oder grösser 1 ist, und
(D-2) gleich oder mehr als 50 Gew.% und gleich oder weniger als 90 Gew.% eines durch die allgemeine Formel (II) wiedergegebenen Monophosphats, worin jede Komponente durch die allgemeine Formel (II) wiedergegeben wird 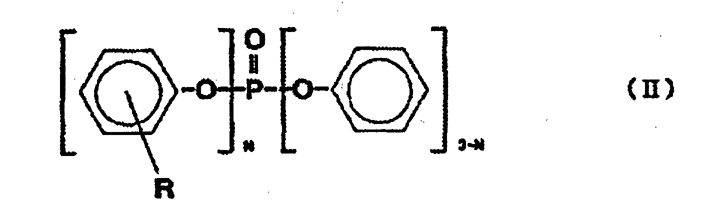 wobei R eine Alkylgruppe, wie z.B. t-Butyl, Isopropyl, Isobutyl, Isoamyl, t-Amyl, und N gleich 0 oder eine ganze Zahl von 1 bis 3 ist; und
(E) weiteren flammenhemmenden Stoffen enthaltend 0,05 bis 5,0 Gewichtsteile, bezogen auf 100 Gewichtsteile des Grundharzes (A)+(B)+(C), eines fluorierten Polyolefins und/oder 0,01 - 1 Gewichtsteile, bezogen auf das Grundharz (A)+(B)+(C), eines Salzes, welches gegenüber aromatischen Polycarbonaten flammenhemmende Eigenschaften besitzt.

2. Flammenhemmende, thermoplastische Formmasse nach Anspruch 1, worin das Gewichtsverhältnis von (D-1) zu (D-2) zwischen 10:90 und 47:53 liegt.

3. Flammenhemmende, thermoplastische Formmasse nach Anspruch 1, worin das Gewichtsverhältnis von (D-1) zu (D-2) zwischen 15:85 und 45:55 liegt.

4. Flammenhemmende, thermoplastische Formmasse nach Anspruch 1, worin die Komponente (D-1) eine Mischung von Polyphosphaten ist, wobei jede Komponente, wiedergegeben durch die Formel (I), einen M-Wert von 1, 2, 3, 4, oder 5 hat.

5. Flammenhemmende, thermoplastische Formmasse nach Anspruch 1, worin R₁, R₂, R₄ und R₅ der Komponente (D-1) allesamt Phenyl sind.

6. Flammenhemmende, thermoplastische Formmasse nach Anspruch 1, worin die Komponente (D-1) Bisphenol-A-diphenylphosphat ist.

7. Flammenhemmende, thermoplastische Formmasse nach Anspruch 1, worin die Komponente (D-2) eine Mischung Alkyl-substituierter Monophosphatester ist, welche 0 bis 20 Gewichtsteile Tri(alkylphenyl)phosphat (N=3), 0 bis 50 Gewichtsteile Di(alkylphenyl)monophenylphosphat (N=2), 0 bis 60 Gewichtsteile Diphenylmono(alkylphenyl)phosphat (N=1), und 10 bis 100 Gewichtsteile Triphenylphosphat (N=0) enthält.

8. Flammenhemmende, thermoplastische Formmasse nach Anspruch 1, worin die Alkylgruppe R der Komponente (D-2) t-Butyl ist.

9. Flammenhemmende, thermoplastische Formmasse nach Anspruch 1, worin worin die Alkylgruppe R der Komponente (D-2) Isopropyl ist.

10. Flammenhemmende, thermoplastische Formmasse nach Anspruch 1, worin die Zusammensetzung der Komponente (D) dergestalt ist, dass der durchschnittliche Wert der Anzahl Phosphatatome je Phosphatmolekül 1,03 - 2,0 beträgt.

11. Flammenhemmende, thermoplastische Formmasse nach Anspruch 1, worin die Zusammensetzung der Komponente (D) dergestalt ist, dass der durchschnittliche Wert der Anzahl Phosphatatome je Phosphatmolekül 1,03 - 1,6 beträgt.

12. Flammenhemmende, thermoplastische Formmasse nach Anspruch 1, worin das fluorierte Polyolefin in Komponente (E) ein fluoriertes Polyolefin mit mittleren Partikelgrössen von 0,05 bis 1000 µm und Dichten von 2,0 g/cm³ bis 2,3 g/cm³ ist.

13. Flammenhemmende, thermoplastische Formmasse nach Anspruch 1, worin das Salz in Komponente (E) ein Salz aus der Gruppe bestehend aus Sulfonatsalzen, Sulfonsulfonatsalzen, und Alkansulfonsäuresalzen ist.

14. Flammenhemmende, thermoplastische Formmasse nach Anspruch 1, worin die Harzzusammensetzung weiters mindest einen Zusatzstoff aus der Gruppe der anorganischen Füllstoffe, Glasfasern, Kohlefasern, thermischen Stabilisatoren, Antioxidantien, Lichtstabilisatoren, Weichmachern, Farbstoffen, Pigmenten, Schmiermitteln und Formtrennmitteln, Füllstoffen, Keimbildnern und antistatischen Mitteln enthält.

15. Flammenhemmende, thermoplastische Formmasse mit verbesserter flammenhemmender Wirkung und thermischer Beständigkeit, im Wesentlichen bestehend aus
(A) 40 bis 99 Gewichtsteilen eines aromatischen Polycarbonats;
(B) 2 bis 40 Gewichtsteilen eines Pfopfpolymers aus Styren und Acrylnitril auf partikulärem, quervernetztem Polybutadienkautschuk;
(C) 1 bis 40 Gewichtsteilen eines Styren(Acrylnitril-Copolymers;
(D) 2 bis 20 Gewichtsteilen, bezogen auf 100 Gewichtsteile (A)+(B)+(C), einer Mischung aus
(D-1) gleich oder mehr als 10 Gew.% und weniger als 50 Gew.% einer Mischung von Polyphosphaten, worin jede Komponente durch die allgemeine Formel (I) 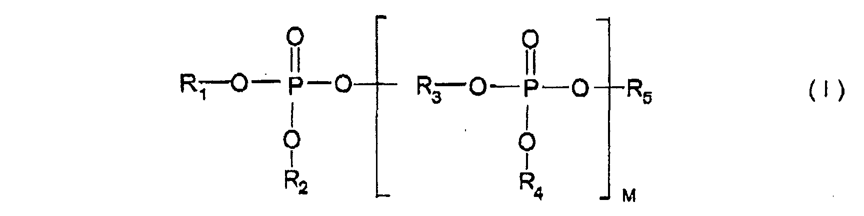 wiedergegeben wird,
wobei R₁, R₂, R₄ und R₅ allesamt Phenyl sind, R₃ ein Rest abgeleitet aus Bisphenol A ist, und M eine ganze Zahl gleich 1, 2, 3, 4 oder 5 ist, und
(D-2) gleich oder mehr als 50 Gew.% und gleich oder weniger als 90 Gew.%, bezogen auf (D), eines Triphenylphosphats ist; und
(E) 0,05 bis 5 Gewichtsteilen eines Tetrafluorethylenpolymers und/oder 0,01 bis 1 Gewichtsteil eines Sulfonsulfonat-Kaliumsalzes.

16. Gegenstände geformt aus der in Anspruch 1 beanspruchten thermoplastischen Harzzusammensetzung.

## Revendications

1. Composition de moulage thermoplastique ignifuge qui comprend
(A) 40 à 99 parties en poids d'un polycarbonate thormoplastique dépourvu d'halogène ;
(B) 1 à 50 parties en poids d'un polymère greffé préparé par polymérisation par greffage de
(B-1) 5 à 95 parties en poids d'un mélange de
(B-1.1) 50 à 95 parties de styrène, d'α-méthylstyrène, d'un styrène dont le noyau est substitué par un halogène ou un groupe méthyle, de méthacrylate d'alkyle en C₁-C₈, d'acrylate d'alkyle en C₁-C₈, ou d'un mélange de ceux-ci, et
(B-1.2) 5 à 50 parties en poids d'acrylonitrile, de méthacrylonitrile, de méthacrylates d'alkyle en C₁-C₈, d'acrylates d'alkyle en C₁-C₈, d'anhydride maléique, de maléimides alkyle en C₁-C₄, ou phényl-N-substitués ou d'un mélange de ceux-ci, et
(B-2) 5 à 95 parties en poids d'un polymère ayant une température de transition vitreuse inférieure à -10°C et choisi dans le groupe constitué par les caoutchoucs de butadiène, les caoutchoucs acryliques, les caoutchoucs éthylène/propylène, les caoutchoucs styrène/butadiène, les caoutchoucs acrylonitrile/butadiène, les caoutchoucs d'isoprène, les caoutchoucs EPDM, les dérivés de polyorganosiloxane et les mélanges de ceux-ci ;
(C) 0 à 50 parties en poids d'un copolymère vinylique ou d'un mélange de celui-ci préparé a partir de
(C-1) 50 à 95 parties en poids de styrène, d'α-méthylstyrène, de styrènes substitués, de méthacrylates d'alkyle en C₁-C₈, d'acrylates d'alkyle en C₁-C₈, ou d'un mélange de ceux-ci, et
(C-2) 50 à 5 parties en poids d'acrylonitrile, de méthacrylonitrile, de méthacrylates d'alkyle en C₁-C₈, d'acrylates d'alkyle en C₁-C₈, d'anhydride maléique, de maléimides N-substitués et d'un mélange de ceux-ci ;
(D) 0,5 à 20 parties en poids, pour 100 parties en poids de (A) + (B) + (C), d'un mélange d'esters phosphate comprenant
(D-1) une quantité supérieure ou égale à 10 % en poids et inférieure à 50 % en poids d'un mélange de polyphosphates dans lequel chaque composant est représenté par la formule générale (I) 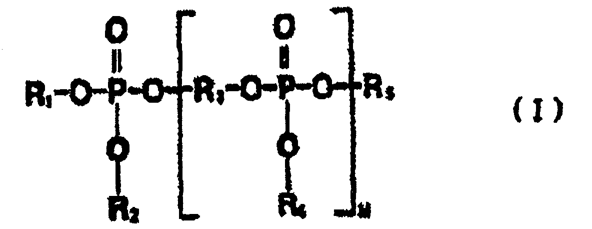 dans laquelle
R₁, R₂, R₄ et R₅, indépendamment les uns des autres, sont un groupe aryle en C₆-C₂₀ ou aryle en C₆-C₂₀ alkyl-substitué, R₃ est un résidu dérivé du bisphénol A, et M est un nombre entier supérieur ou égal à 1, et
(D-2) une quantité supérieure ou égale à 50 % en poids et inférieure ou égale à 90 % en poids d'un monophosphate représenté par la formule générale (II) ou d'un mélange de monophosphates dans lequel chaque composant est représenté par la formule générale (II) 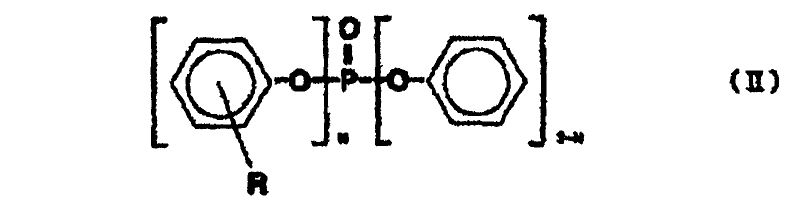 dans laquelle
R est un groupe alkyle tel que t-butyle, isopropyle, isoamyle, t-amyle, et N vaut 0 ou est un nombre entier de 1 à 3 ; et
(E) d'antres composés retardateurs d'inflammation constituant 0,05 à 5,0 parties en poids, pour 100 parties en poids de la résine de base (A) + (B) + (C), d'une polyoléfiné fluorée et/ou 0,01 à 1 partie en poids de la résine de base (A) + (B) + (C) d'un sel ayant des propriétés retardatrices d'inflammation pour les polycarbonates aromatique.

2. Composition de moulage thermoplastique ignifuge selon la revendication 1, dans laquelle le rapport pondéral de (D-1) à (D-2) est compris entre 10:90 et 47:53.

3. Composition de moulage thermoplastique ignifuge selon la revendication 1, dans laquelle le rapport pondéral de (D-1) à (D-2) est compris entre 15:85 et 45:55.

4. Composition de moulage thermoplastique ignifuge selon la revendication 1, dans laquelle ledit composant (D-1) est un mélange de polyphosphates dans lequel chaque composant, représenté par la formule (I), a une valeur de M de 1, 2, 3, 4 ou 5.

5. Composition de moulage thermoplastique ignifuge selon la revendication 1, dans laquelle R₁, R₂, R₄ et R₅ du composant (D-1) sont tous des groupes phényle.

6. Composition de moulage thermoplastique ignifuge selon la revendication 1, dans laquelle le composant (D-1) est le diphénylphosphate de bisphénol A.

7. Composition de moulage thermoplastique ignifuge selon la revendication 1, dans laquelle ledit composant (D-2) est un mélange d'esters monophosphate alkyl-substitués comprenant 0 à 20 parties en poids de tri(alkylphényl)-phosphate (N = 3), de 0 à 50 parties en poids de di(alkylphényl)monophénylmhosphate (N = 2), de 0 à 60 parties en poids de diphénylmono(alkylphényl)phosphate (N = 1) et de 10 à 100 parties en poids de triphénylphosphate (N = 0).

8. Composition de moulage thermoplastique ignifuge selon la revendication 1, dans laquelle le groupe alkyle R dudit composant (D-2) est le groupe t-butyle.

9. Composition de moulage thermoplastique ignifuge selon la revendication 1, dans laquelle le groupe alkyle R dudit composant (D-2) est le groupe isopropyle.

10. Composition de moulage thermoplastique ignifuge selon la revendication 1, dans laquelle la composition dudit composant (D) est une composition telle que la valeur moyenne du nombre d'atomes de phosphore par molécule de phosphate soit de 1,03 à 2,0.

11. Composition de moulage thermoplastique ignifuge selon la revendication 1, dans laquelle la composition dudit composant (D) est une composition telle que la valeur moyenne du nombre d'atomes de phosphore par molécule de phosphate soit de 1,03 à 1,6.

12. Composition de moulage thermoplastique ignifuge selon la revendication 1, dans laquelle ladite polyoléfine fluorée dans le composant (E) est une polyoléfine fluorée ayant une taille de particule moyenne de 0,05 à 1000 µm et une masse volumique de 2,0 g/cm³ à 2,3 g/cm³.

13. Composition de moulage thermoplastique ignifuge selon la revendication 1, dans laquelle le sel dans le composant (E) est un sel choisi dans le groupe constitué par les sels de sulfonates, les sels de sulfonesulfonate et les sels d'acides alcanesulfoniques.

14. Composition de moulage thermoplastique ignifuge selon la revendication 1, dans laquelle la composition de résine comprend en outre au moins un additif choisi dans le groupe constitué par les charges minérales, les fibres de verre, les fibres de carbone, les stabilisants thermiques, les antioxydants, les stabilisants à la lumière, les plastifiants, les colorants, les pigments, les lubrifiants et les agents de démoulage, les charges, les agents de nucléation et les agents antistatiques.

15. Composition de moulage thermoplastique ignifuge possédant un caractère retardateur d'inflammation et une stabilité thermique améliorés, essentiellement constitué de
(A) 40 à 99 parties en poids d'un polycarbonate aromatique ;
(B) 2 à 40 parties en poids d'un polymère greffé de styrène et d'acrylonitrile sur un caoutchouc de polybutadiène particulaire réticulé ;
(C) 1 à 40 parties en poids d'un copolymère styrène/acrylonitrile ;
(D) 2 à 20 parties en poids, pour 100 parties en poids de (A) + (B) + (C), d'un mélange de
(D-1) une quantité supérieure ou égale à 10 % en poids et inférieure à 50 % en poids d'un mélange de polyphosphates dans lequel chaque composant est représenté par la formule générale (I) 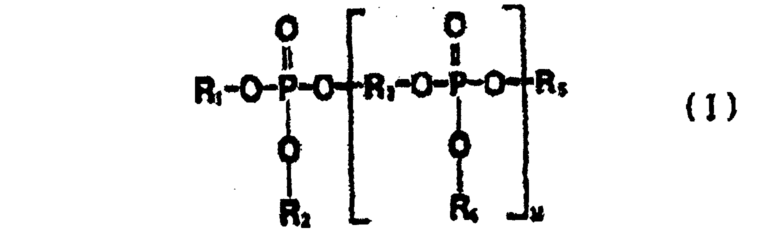 dans laquelle
R₁, R₂, R₄ et R₅, indépendamment les uns des autres, sont un groupe phényle, R₃ est un résidu dérivé du bisphénol A, et M est un nombre entier supérieur ou égal à 1, 2, 3, 4 ou 5, et
(D-2) une quantité supérieure ou égale à 50 % en poids et inférieure ou égale à 90 % en poids, par rapport à (D), de triphénylphosphate ; et
(E) 0,05 à 5 parties en poids d'un polymère de tétrafluoroéthylène et/ou de 0,01 à 1 partie en poids d'un sel de potassium de sulfonesulfonate.

16. Article formé à partir de la composition de résine thermoplastique selon la revendication 1.
